# EUROPÄISCHE PATENTSCHRIFT

(11) **EP 2 714 806 B1**
(45) Veröffentlichungstag und Bekanntmachung des Hinweises auf die Patenterteilung: **08.07.2015**
(21) Anmeldenummer: 12722342.8
(22) Anmeldetag: 16.05.2012
(51) Int. Cl.: C08L 77/02, C08L 77/06, C08L 79/08, C08K 3/00, C08K 3/02, C08K 5/00, C08K 5/3492, C08K 5/5313

(54) **THERMOPLASTISCHE FORMMASSE**
THERMOPLASTIC MOULDING MATERIAL
MASSE DE FORMAGE THERMOPLASTIQUE

(30) Priorität: 27.05.2011 EP 11167954
(43) Veröffentlichungstag der Anmeldung: 09.04.2014
(73) Patentinhaber: BASF SE, 67056 Ludwigshafen (DE)
(72) Erfinder: MÜLLER-CRISTADORO, Anna, 64646 Heppenheim (DE); KÖNIG, Alexander, 76646 Bruchsal (DE); ROTH, Michael, 64686 Lautertal (DE)
(86) Internationale Anmeldenummer: PCT/EP2012/059106
(87) Internationale Veröffentlichungsnummer: WO 2012/163680

(56) Entgegenhaltungen:
- WO-A1-2005/118698
- WO-A2-2004/072032
- WO-A2-2009/036018

## Beschreibung

Die vorliegende Erfindung betrifft eine thermoplastische Formmasse, die folgende Komponenten enthält
A) von 20 bis 98,99 Gew.-% mindestens eines Polyamids,
B) von 0.01 bis 40 Gew.-% mindestens eines verzweigten Polyimids, gewählt aus Kondensationsprodukten von entweder
   b1) mindestens einem Polyisocyanat mit im Mittel mehr als zwei Isocyanatgruppen pro Molekül oder
   b2) mindestens einem Polyamin mit im Mittel mehr als zwei Aminogruppen pro Molekül und
   b3) mindestens einer Polycarbonsäure mit mindestens drei COOH-Gruppen pro Molekül oder ihrem Anhydrid_{[0]},
C) von 1 bis 59 Gew.-% mindestens eines Flammschutzmittels ausgewählt aus der Gruppe
   c1) der phosphorhaltigen Flammschutzmittel
   c2) der stickstoffhaltigen Flammschutzmittel
      und deren Mischungen
D) von 0 bis 50 Gew.-% weitere Zusatzstoffe
wobei die Summe der Gewichtsanteile 100 Gew.-% bezogen auf die Formmasse ergibt.

Weiterhin betrifft die vorliegende Erfindung die Verwendung der thermoplastischen Formmasse als Überzugmittel und zur Herstellungen von Fasern, Folien oder Formkörpem sowie Fasern, Folien oder Formkörper enthaltend eine solche thermoplastische Formmasse.

Bevorzugte Ausführungsformen sind den Ansprüchen und der Beschreibung zu entnehmen. Kombinationen bevorzugter Ausführungsformen fallen in den Rahmen der vorliegenden Erfindung.

Der Bedarf an flammhemmenden Formmassen ist von wachsendem Interesse, wobei insbesondere Formmassen mit einer guten Verarbeitbarkeit in der Schmelze von Interesse sind. Außerdem sind thermisch belastbare Formmassen von zunehmender Bedeutung.

So offenbart EP 0 547 809 A1 eine flammhemmende Polyester-Formmasse enthaltend halogenierte Flammhemmer, Silikat Füllstoff, Neoalkoxytitanat Verbindungen und Polyetherimidester.

Die Schrift EP 0921 161 A1 offenbart wiederum eine flammhemmende Formmasse enthaltend Polyetherimide, aromatische Polycarbonate und funktionalisierte Polysiloxane.

Die Aufgabe der Erfindung bestand darin, eine thermoplastische Formmasse zur Verfügung zu stellen, die sehr gute flammhemmende Eigenschaften aufweist. Zudem sollte die Formmasse eine gute thermische Stabilität aufweisen. Insbesondere sollte das Polyamid der Formmasse gegen Umesterung stabilisiert werden. Umesterung des Polyamids würde unter anderem zu verschlechterten mechanischen Eigenschaften führen.
Allerdings sollte die Formmasse halogenfrei, insbesondere brom- und chlorfrei sein. Auch sollte die Formmasse einen hohen Aromatenanteil aufweisen, der unter anderem bewirken kann, dass die Formmasse bei Verbrennung schnell verkohlt und nicht bei Erhitzung tropft.

Hierbei sollten insbesondere Formmassen zur Verfügung gestellt werden, die keine halogenhaltigen Flammschutzmittel umfassen, wobei insbesondere chlor- und bromfreie Formmassen von Interesse sind. Bei phosphorhaltigen Flammschutzmitteln sind solche gefragt, die eine hohe Phosphorstabilität aufweisen. Außerdem sollten Formmassen bereitgestellt werden, die hydrolysestabil sind.

Darüber hinaus soll die thermoplastische Formmasse gute mechanische Eigenschaften und eine gute Verarbeitbarkeit in der Schmelze aufweisen.

Demgemäß wurde die eingangs definierte thermoplastische Formmasse gefunden.

Halogenfrei ist in diesem Zusammenhang entsprechend den Definitionen der "International Electronical Commission" (IEC 61249-2-21) und der "Japan Printed Circuit Association" (JPCA-ES-01-1999) zu verstehen, die unter halogenfreien Materialen solche verstehen, die weitestgehend chlor- und bromfrei sind.

Komponente A) der erfindungsgemäßen thermoplastischen Formmasse ist ein Polyamid.

Dabei kann das Polyamid ein Homo- oder Copolymer sein. Im Sinne der Erfindung kann als Polyamid mindestens ein lineares als auch überwiegend verzweigtes Polyamid eingesetzt werden. Unter einem linearen Polyamid sind solche zu verstehen, die aus Dicarbonsäuren und Diaminen hergestellt werden können. Unter einem überwiegend verzweigten Polyamid ist wiederum ein solches zu verstehen, das aus Aminen und Carbonsäuren hergestellt werden kann, bei denen die Monomere mehr als zwei Säuregruppen und/oder Amingruppen umfassen können, sodass Verzweigungsstellen auftreten können.

Das Polyamid der erfindungsgemäßen thermoplastischen Formmasse kann im allgemeinen eine Viskositätszahl von 30 bis 350, vorzugsweise 40 bis 200 ml/g aufweisen, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie Amino-capronitril (PA 6) und Adipodinitril mit Hexamethylendiamin (PA 66) zum Beispiel durch sogenannte Direktpolymerisation in Anwesenheit von Wasser, wie beispielsweise in der DE-A 10313681, EP-A 1198491 und EP 922065 beschrieben.

Außerdem seien auch noch Polyamide erwähnt, die zum Beispiel durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.
Weiterhin haben sich teilaromatischen Copolyamide wie PA 6/6T und PA 66/6T als besonders vorteilhaft erwiesen, insbesondere solche, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Die bevorzugten teilaromatischen Copolyamide A) enthalten als Komponente a₁) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten (a₂) und/oder Einheiten, die sich von Adipinsäure und Hexamethylendiamin (a₃) ableiten.

Der Anteil an Einheiten, die sich von ε-Caprolactam ableiten, beträgt maximal 50 Gew.-%, vorzugsweise 20 bis 50 Gew.-%, insbesondere 25 von 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten a₁)) und 20 bis 50, vorzugsweise 25 bis 40 Gew.-% Einheiten, die sich von ε-Caprolactam ableiten (Einheiten a₂)), erwiesen. Neben den vorstehend beschriebenen Einheiten a₁) bis a₃) können die teilaromatischen Copolyamide noch untergeordnete Mengen, vorzugsweise nicht mehr als 15 Gew.-%, insbesondere nicht mehr als 10 Gew.-% an weiteren Polyamidbausteinen (a₄) enthalten, wie sie von anderen Polyamiden bekannt sind. Diese Bausteine können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Die Schmelzpunkte der teilaromatischen Copolyamide A) liegen im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und eine Glasübergangstemperatur von mehr als 110°C auf.

Binäre Copolyamide auf der Basis von Terephthalsäure, Adipinsäure und Hexamethylendiamin (HMD) erreichen bereits bei niedrigeren Gehalten von etwa 55 Gew.-% Einheiten aus Terephthalsäure und Hexamethylendiamin Schmelzpunkte von 300°C und mehr, wobei die Glasübergangstemperatur nicht ganz so hoch liegt wie bei binären Copolyamiden, die anstelle von Adipinsäure bzw. Adipinsäure/HMD ε-Caprolactam enthalten.

Die nachfolgende nicht abschließende Aufstellung enthält die genannten, sowie weitere Polyamide A) im Sinne der Erfindung und die enthaltenen Monomeren.

### AB-Polymere:

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

### AA/BB-Polymere

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | Nonyldiamin/Terephthalsäure |
| PA MXD6 | m-Xylylendiamin, Adipinsäure |
| | |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Es können aber auch Mischungen obiger Polyamide eingesetzt werden.

Als Monomere kommen auch cyclische Diamine wie die der allgemeinen Formel (I) 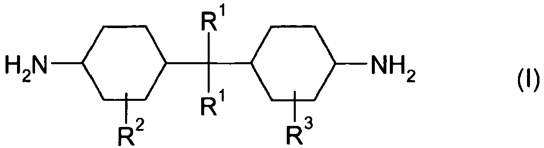 in der R1 Wasserstoff oder eine C1-C4-Alkylgruppe, R2 eine C1-C4-Alkylgruppe oder Wasserstoff und R3 eine C1-C4-Alkylgruppe oder Wasserstoff bedeutet, in Betracht.

Besonders bevorzugte Diamine (I) sind Bis-(4-aminocyclohexyl)-methan, Bis-(4-amino-3-methylcyclohexyl)-methan, Bis-(4-aminocyclohexyl)-2,2-propan oder Bis-(4-amino-3-methylcyclohexyl)-2,2-propan. Als weitere Diamine (I) sind 1,3- oder 1,4-Cyclohexandiamin oder Isophorondiamin genannt.

Insbesondere bevorzugt sind hierbei Mischungen aus amorphen Polyamiden mit anderen amorphen Polyamiden oder mit teilkristallinen Polyamiden, wobei der teilkristalline Anteil von 0 bis 50, bevorzugt von 1 bis 35 Gew.-% betragen kann, bezogen auf 100 Gew.-% A).

Erfindungsgemäße thermoplastische Formmassen enthalten außerdem mindestens ein Polyimid (B), welches verzweigt ist und gewählt wird aus Kondensationsprodukten von von entweder
b1) mindestens einem Polyisocyanat mit im Mittel mehr als zwei Isocyanatgruppen pro Molekül oder
b2) mindestens einem Polyamin mit im Mittel mehr als zwei Aminogruppen pro Molekül und
b3) mindestens einer Polycarbonsäure mit mindestens drei COOH-Gruppen pro Molekül oder ihrem Anhydrid,

Polyimid (B) kann ein Molekulargewicht M_{w} im Bereich von 1.000 bis 200.000 g/mol aufweisen, bevorzugt sind mindestens 2.000 g/mol.

Polyimid (B) kann mindestens zwei Imidgruppen pro Molekül aufweisen, bevorzugt sind mindestens 3 Imidgruppen pro Molekül.

In einer Ausführungsform der vorliegenden Erfindung kann Polyimid (B) bis zu 1.000 Imidgruppen pro Molekül aufweisen, bevorzugt bis zu 660 pro Molekül.

In einer Ausführungsform der vorliegenden Erfindung bezeichnet die Angabe der Isocyanatgruppen bzw. der COOH-Gruppen pro Molekül jeweils den Mittelwert (Zahlenmittel).

Polyimid (B) kann aus strukturell und molekular einheitlichen Molekülen zusammengesetzt sein. Bevorzugt jedoch ist, wenn Polyimid (B) eine Mischung von molekular und strukturell unterschiedlichen Molekülen ist, beispielsweise sichtbar an der Polydispersität M_{w}/Mₙ von mindestens 1,4, bevorzugt M_{w}/Mₙ von 1,4 bis 50, bevorzugt 1,5 bis 10. Die Polydispersität kann man nach bekannten Methoden bestimmen, insbesondere durch Gelpermeationschromatographie (GPC). Geeigneter Standard ist beispielsweise Polymethylmethacrylat (PMMA).

In einer Ausführungsform der vorliegenden Erfindung weist Polyimid (B) neben Imidgruppen, die das Polymergerüst bilden, end- oder seitenständig weiterhin mindestens drei, bevorzugt mindestens sechs, mehr bevorzugt mindestens zehn end- oder seitenständige funktionelle Gruppen auf. Bei funktionellen Gruppen in Polyimid (B) handelt es sich vorzugsweise um Anhydrid- oder Säuregruppen und/oder freie oder verkappte NCO-Gruppen. Polyimide (B) weisen vorzugsweise nicht mehr als 500 end- oder seitenständige funktionelle Gruppen auf, bevorzugt nicht mehr als 100.

Alkylgruppen wie beispielsweise Methylgruppen sind also keine Verzweigung eines Moleküls Polyimid (B).

Polyisocyanat (b1) kann man aus beliebigen Polyisocyanaten wählen, die im Mittel mehr als zwei Isocyanatgruppen pro Molekül aufweisen, die verkappt oder vorzugsweise frei vorliegen können. Bevorzugt sind trimere oder oligomere Diisocyanate, beispielsweise oligomeres Hexamethylendiisocyanat, oligomeres Isophorondiisocyanat, oligomeres Toluylendiisocyanat, oligomeres Diphenylmethandiisocyanat - so genanntes Polymer-MDI - und Mischungen der vorstehend genannten Polyisocyanate. Beispielsweise liegt sogenanntes trimeres Hexamethylendiisocyanat in vielen Fällen nicht als reines trimeres Diisocyanat vor, sondern als Polyisocyanat mit einer mittleren Funktionalität von 3,6 bis 4 NCO-Gruppen pro Molekül. Analoges gilt für oligomeres Tetramethylendiisocyanat und oligomeres Isophorondiisocyanat.

In einer Ausführungsform der vorliegenden Erfindung handelt es sich bei Polyisocyanat mit mehr als zwei Isocyanatgruppen pro Molekül um eine Mischung aus mindestens einem Diisocyanat und mindestens einem Triisocyanat oder einem Polyisocyanat mit mindestens 4 Isocyanatgruppen pro Molekül.

In einer Ausführungsform der vorliegenden Erfindung hat Polyisocyanat (b1) im Mittel 2,2, bevorzugt 2,5, besonders bevorzugt mindestens 3,0 Isocyanatgruppen pro Molekül.

In einer Ausführungsform der vorliegenden Erfindung wählt man Polyisocyanat (b1) aus oligomerem Hexamethylendiisocyanat, oligomerem Isophorondiisocyanat, oligomerem Diphenylmethandiisocyanat und Mischungen der vorstehend genannten Polyisocyanate.

Polyisocyanat (b1) kann neben Urethangruppen auch eine oder mehrere andere funktionelle Gruppen aufweisen, beispielsweise Harnstoff-, Allophanat-, Biuret-, Carbodiimid-, Amid-, Ester, Ether-, Uretonimin-, Uretdion-, Isocyanurat- oder Oxazolidingruppen.

Bei einer zweiten Variante kann analog zu dem in der Schrift US 2010/009206 beschriebenen Verfahren ein Polyamin (b2) und eine Polycarbonsäure b3) und/oder ein Polycarbonsäureester (b3) miteinander umgesetzt werden.

Das Polyamin (b2) kann aus beliebigen Polyaminen gewählt werden, die im Mittel mehr als zwei Amingruppen pro Molekül aufweisen, die verkappt oder vorzugsweise frei vorliegen können.

Als Polyaminamin (b2) eignen sich auch die in der Schrift US 2010/009206 aufgeführten Verbindungen wie zum Beispiel 3,5-Di(4-aminophenoxy)anilin, 3,5-Di(3-methyl-1,4-aminophenoxy)anilin, 3,5-Di(3-methoxy-4-aminophenoxy)anilin, 3,5-Di(2-methyl-4-aminophenoxy)anilin, 3,5 -Di(2-methoxy-4-aminophenoxy)anilin, 3,5-Di(3-ethyl-4-aminophenoxy)anilin und vergleichbare Substanzen.

Des weiteren eignen sich Amine wie 1,3,5-Tri(4-aminophenoxy)benzen, 1,3,5-Tri(3-methyl-1,4-aminophenoxy) benzen, 1,3,5-Tri(3 -methoxy-4-aminophenoxy) benzen, 1,3,5-Tri(2-methyl-4-aminophenoxy)benzen, 1,3,5 -tri(2-methoxy-4-aminophenoxy)benzen, 1,3,5-tri(3-ethyl-4-aminophenoxy)benzen.

Auch können als aromatische Triamine 1,3,5-Tri(4-aminophenylamino)benzen, 1,3,5-tri(3-methyl-4-aminophenylamino)benzen, 1,3,5-tri(3-methoxy-4-aminophenylamino) benzen, 1,3,5-tri(2-methyl-4-aminophenylamino)benzen,1,3,5-tri(2-methox-,4-aminophenylamino)benzen, 1,3,5-Tri(3-ethyl-4-aminophenylamino)benzen und ähnliche eingesetzt werden.

Weitere aromatische Triamine sind 1,3,5-Tri(4-aminophenyl)benzen, 1,3,5-Tri(3 - methyl 1,4-aminophenyl)benzen, 1,3,5-Tri(3-methoxy-4-aminophenyl)benzene, 1,3,5-Tri(2-methyl-4-aminophenyl)benzen, 1,3,5-Tri(2- methoxy-4-aminophenyl)benzen, 1,3,5 -Tri(3-ethyl4-aminophenyl)benzene und ähnliche Verbindungen.

Auch geeignet sind 1,3,5-Tri(4-aminophenyl)amin, 1,3,5-Tri(3-methyl-1,4-aminophenyl )amin, 1,3,5-Tri(3-methoxy-4-aminophenyl)amin, 1,3,5-Tri(2-methyl-4-aminophenyl)amin, 1,3,5-Tri(2-methoxy-4-aminophenyl)amin, 1,3,5-Tri(3-ethyl-4-aminophenyl)amin und ähnliche Verbindungen.

Weitere Beispiele sind Tris(4-(4-aminophenoxy)phenyl)methan, Tris(4-(3-methyl-4-aminophenoxy)phenyl)methan, Tris(4-(3-methoxy-4-aminophenoxy)phenyl)methan, Tris(4-(2-methyl-4-aminophenoxy)phenyl)methan, Tris(4-(2-methoxy-4-aminophenoxy )phenyl)methan, Tris(4-(3-ethyl,4-aminophenoxy)phenyl)methan und vergleichbare Verbindungen.
Als Amin sind auch geeignet Tris(4-(4-aminophenoxy)phenyl)ethan, Tris(4-(3 -methyl 1,4'-aminophenoxy)phenyl)ethan, Tris(4-(3-methoxy,4-aminophenoxy)phenyl)ethan, Tris(4-(2-methyl,4-aminophenoxy)phenyl)ethan, Tris(4-(2-methoxy,4-aminophenoxy)phenyl)ethan, Tris(4-(3-ethyl,4-aminophenoxy)phenyl)ethan und ähnliche.

Des Weiteren sind Polyamine einsetzbar, die in der Schrift US 2006 0 033 225 A1 genannt sind. Zum Beispiel können auch 3, 3', 4, 4'-Biphenyltetraamin (TAB), 1, 2, 4, 5-benzentetraamin, 3, 3', 4, 4'-Tetraaminodiphenylether, 3,3',4,4'-tetraaminodiphenylmethan, 3, 3', 4, 4'-Tetraaminobenzophenon, 3, 3', 4-Triaminodiphenyl, 3, 3', 4-Triaminodiphenylmethan, 3, 3', 4-Triaminobenzophenon, 1,2,4-Triaminobenzen, deren mono-, di-, tri-, oder tetra-Säuresalze wie 2,4,6-Triaminopyrimidin (TAP) eingesetzt werden.

Als Polycarbonsäuren (b3) werden aliphatische oder vorzugsweise aromatische Polycarbonsäuren gewählt, die mindestens drei COOH-Gruppen pro Molekül aufweisen, oder die betreffenden Anhydride, vorzugsweise wenn sie in niedermolekularer, also nicht polymerer Form vorliegen. Auch solche Polycarbonsäuren mit drei COOH-Gruppen sind mit umfasst, bei denen zwei Carbonsäuregruppen als Anhydrid vorliegen und die dritte als freie Carbonsäure.

In einer bevorzugten Ausführungsform der vorliegenden Erfindung wählt man als Polycarbonsäure (b3) eine Polycarbonsäure mit mindestens vier COOH-Gruppen pro Molekül oder das betreffende Anhydrid.

Beispiele für Polycarbonsäuren (b3) und ihre Anhydride sind 1,2,3-Benzoltricarbonsäure und 1,2,3-Benzoltricarbonsäuredianhydrid, 1,3,5-Benzoltricarbonsäure (Trimesinsäure), bevorzugt 1,2,4-Benzoltricarbonsäure (Trimellitsäure), Trimellitsäureanhydrid und insbesondere 1,2,4,5-Benzoltetracarbonsäure (Pyromellitsäure) und 1,2,4,5-Benzoltetracarbonsäuredianhydrid (Pyromellitsäuredianhydrid), 3,3',4,4"-Benzophenontetracarbonsäure, 3,3',4,4"-Benzophenontetracarbonsäuredianhydrid, weiterhin Benzolhexacarbonsäure (Mellitsäure) und Anhydride der Mellitsäure.

Weiterhin geeignet sind Mellophansäure und Mellophansäureanhydrid, 1,2,3,4-Benzoltetracarbonsäure und 1,2,3,4-Benzoltetracarbonsäuredianhydrid, 3,3,4,4-Biphenyltetracarbonsäure und 3,3,4,4-Biphenyltetracarbonsäuredianhydrid, 2,2,3,3-Biphenyltetracarbonsäure und 2,2,3,3-Biphenyltetracarbonsäuredianhydrid, 1,4,5,8-Naphthalintetracarbonsäure und 1,4,5,8-Naphthalintetracarbonsäuredianhydrid, 1,2,4,5-Naphthalintetracarbonsäure und 1,2,4,5-Naphthalintetracarbonsäuredianhydrid, 2,3,6,7-Naphthalintetracarbonsäure und 2,3,6,7-Naphthalintetracarbonsäuredianhydrid, 1,4,5,8-Decahydronaphthalintetracarbonsäure und 1,4,5,8-Decahydronaphthalintetracarbonsäuredianhydrid, 4,8-dimethyl-1,2,3,5,6,7-hexahydronaphthalin-1,2,5,6-tetracarbonsäure und 4,8-dimethyl-1,2,3,5,6,7-hexahydronaphthalin-1,2,5,6-tetracarbonsäuredianhydrid, 2,6-Dichloronaphthalin-1,4,5,8-tetracarbonsäure und 2,6-Dichloronaphthalin-1,4,5,8-tetracarbonsäuredianhydrid, 2,7-Dichloronaphthalin-1,4,5,8-tetracarbonsäure und 2,7-Dichloronaphthalin-1,4,5,8-tetracarbonsäuredianhydrid, 2,3,6,7-Tetrachloronaphthalin-1,4,5,8-tetracarbonsäure und 2,3,6,7-Tetrachloronaphthalin-1,4,5,8-tetracarbonsäuredianhydrid, 1,3,9,10-Phenanthrentetracarbonsäure und 1,3,9,10-Phenanthrentetracarbonsäuredianhydrid, 3,4,9,10 Perylentetracarbonsäure und 3,4,9,10 Perylentetracarbonsäuredianhydrid, Bis(2,3-dicarboxyphenyl)methan und Bis(2,3-dicarboxyphenyl)methandianhydrid, Bis(3,4-dicarboxyphenyl)methan und Bis(3,4-dicarboxyphenyl)methandianhydrid, 1,1-Bis(2,3-dicarboxyphenyl)ethan und 1,1-Bis(2,3-dicarboxyphenyl)ethandianhydrid, 1,1-Bis(3,4-dicarboxyphenyl)ethan und 1,1-Bis(3,4-dicarboxyphenyl)ethandianhydrid, 2,2-Bis(2,3-dicarboxyphenyl)propan und 2,2-Bis(2,3-dicarboxyphenyl)propandianhydrid, 2,3-Bis(3,4-dicarboxyphenyl)propan und 2,3-Bis(3,4-dicarboxyphenyl)propandianhydrid, Bis-(3,4-carboxyphenyl)sulfon und Bis(3,4-carboxyphenyl)-sulfondianhydrid, Bis(3,4-carboxyphenyl)ether und Bis(3,4-carboxyphenyl)etherdianhydrid, Ethylentetracarbonsäure und Ethylentetracarbonsäuredianhydrid, 1,2,3,4-Butantetracarbonsäure und 1,2,3,4-Butantetracarbonsäuredianhydrid, 1,2,3,4-Cyclopentantetracarbonsäure und 1,2,3,4-Cyclopentantetracarbonsäuredianhydrid, 2,3,4,5-Pyrrolidintetracarbonsäure und 2,3,4,5-Pyrrolidintetracarbonsäuredianhydrid, 2,3,5,6-Pyrazintetracarbonsäure und 2,3,5,6-Pyrazintetracarbonsäuredianhydrid, 2,3,4,5-Thiophentetracarbonsäure und 2,3,4,5-Thiophentetracarbonsäuredianhydrid.

In einer Ausführungsform der vorliegenden Erfindung setzt man Anhydride aus US 2,155,687 oder US 3,277,117 zur Synthese von Polyimid (B) ein.

Die Herstellung der Komponente (B) kann dem in folgender Formel gezeigten Mechanismus folgen.

Wenn ein Polyisocyanat (b1) und eine Polycarbonsäure (b3) vorzugsweise in Gegenwart eines Katalysators miteinander umgesetzt werden, wird eine Imidgruppe unter Abspaltung von CO₂ und H₂O geformt. Wenn ein Polyisocyanat (b1) und ein entsprechendes Anhydride (b3) miteinander umgesetzt werden wird eine Imidgruppe unter Abspaltung von CO₂ gebildet.

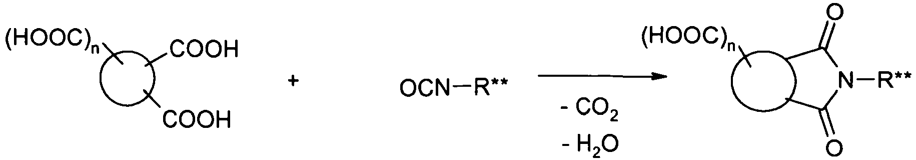

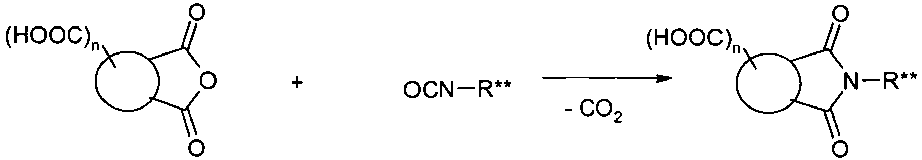

In obiger Formel ist R** ein Polyisocyanat (b2) Radikal das in der Formel nicht weiter spezifiziert ist und n ist eine Zahl größer gleich 1. Ist n zum Beispiel 1, so handelt es sich um eine Tricarboxylsäure. Ist n 2 handelt es sich um eine Tetracarboxylsäure. (HOOC)ₙ kann ersetzt werden durch C(=O)-O-C(=O) oder einen Esterest.

Wenn ein Polyamin (b2) und die Polycarbonsäure (b3) beziehungsweise das entsprechende Anhydrid (b3) bevorzugt in der Gegenwart eines Katalysators umgesetzt werden, formt sich eine Imidbindung unter der Abspaltung von Wasser.

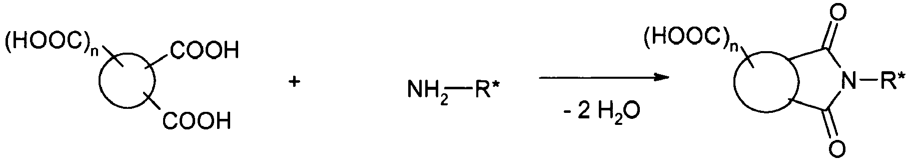

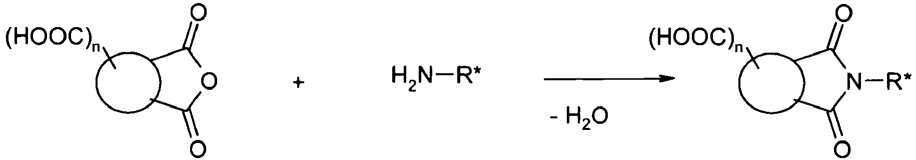

In obiger Formel ist R* ein Polyamin (b2) Radikal das in der Formel nicht weiter spezifi-ziert ist. n ist eine Zahl größer gleich 1. Im Fall einer Tricarboxylsäure ist n 1. Im Fall einer Tetracarboxylsäure ist n 2. (HOOC)ₙ kann ersetzt werden durch einen C(=O)-O-C(=O) Rest oder einen Ester.

Komponente B) kann zum Beispiel durch das im Folgenden beschriebene Verfahren hergestellt werden.

Man lässt Polyisocyanat (b1) und Polycarbonsäure (b3) - vorzugsweise in Gegenwart eines Katalysators - miteinander kondensieren, so wird unter Abspaltung von CO₂ und H₂O eine Imidgruppe gebildet. Setzt man statt Polycarbonsäure (b3) das entsprechende Anhydrid ein, so wird unter Abspaltung von CO₂ eine Imidgruppe gebildet.

Als Katalysatoren sind insbesondere Wasser und Bronsted-Basen geeignet, beispielsweise Alkalimetallalkoholate, insbesondere Alkanolate von Natrium oder Kalium, beispielsweise Natriummethanolat, Natriumethanolat, Natriumphenolat, Kaliummethanolat, Kaliumethanolat, Kaliumphenolat, Lithiummethanolat, Lithiumethanolat und Lithiumphenolat.

Der Katalysator kann im Bereich von 0,005 bis 0,1 Gew.-% Katalysator eingesetzt werden, bezogen auf Summe aus Polyisocyanat (b1) und Polycarbonsäure (b3) bzw. Polyisocyanat (b1) und Anhydrid (b3). Bevorzugt sind 0,01 bis 0,05 Gew.-% Katalysator.

Das Polyisocyanat (b1) kann in Mischung mit mindestens einem Diisocyanat eingesetzt werden, beispielsweise mit Toluylendiisocyanat, Hexamethylendiisocyanat oder mit Isophorondiisocyanat. In einer besonderen Variante setzt man Polyisocyanat (b1) im Gemisch mit dem korrespondierenden Diisocyanat ein, beispielsweise trimeres HDI mit Hexamethylendiisocyanat oder trimeres Isophorondiisocyanat mit Isophorondiisocyanat oder polymeres Diphenylmethandiisocyanat (Polymer MDI) mit Diphenylmethandiisocyanat.

Die Polycarbonsäure (b3) kann in Mischung mit mindestens einer Dicarbonsäure oder mit mindestens einer Dicarbonsäureanhydrid eingesetzt werden, beispielsweise mit Phthalsäure oder Phthalsäureanhydrid.

In einer Ausführungsform der vorliegenden Erfindung wird als Polyimid (B) ein hyperverzweigtes Polyimid eingesetzt. Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, geteilt durch die Summe der mittlere Anzahl von dendritischen, linearen und terminalen Verknüpfungen, multipliziert mit 100, 10 bis 99,9 %, bevorzugt 20 bis 99 %, besonders bevorzugt 20 bis 95 % beträgt. Unter "Dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30 und siehe Sunder et al., Chem. Eur. J. 2000, 6 (14), 2499-2506. Der Verzweigungsgrad lässt sich mit Hilfe von "invers gated" ¹³NMR-Spektren berechnen.

Die Komponente B) kann hergestellt werden, indem Polyisocyanat (b1) und Polycarbonsäure (b3) bzw. Anhydrid (b3) in einem Mengenverhältnis eingesetzt werden, bei dem der molare Anteil von NCO-Gruppen zu COOH-Gruppen im Bereich von 1 : 3 bis 3 : 1 liegt, bevorzugt sind 1 : 2 bis 2 : 1. Dabei zählt eine Anhydridgruppe der Formel CO-O-CO wie zwei COOH-Gruppen.

Typischer Weise wird die Komponente B) bei Temperaturen im Bereich von 50 bis 200°C hergestellt, bevorzugt sind 50 bis 140°C, besonderes bevorzugt sind 50 bis 100°C.

Die Verbindungen B) können in Gegenwart eines Lösungsmittels oder Lösungsmittelgemisches hergestellt werden. Beispiele für geeignete Lösungsmittel sind N-Methylpyrrolidon, N-Ethylpyrrolidon, Dimethylformamid, Dimethylacetamid, Dimethylsulfoxid, Dimethylsulphone, Xylol, Phenol, Kresol, Ketone wie beispielsweise Aceton, Methylethylketon (MEK), Methylisobutylketon (MIBK), Acetophenon, weiterhin Mono- und Dichlorbenzol, Ethylenglykolmonoethyletheracetat, und Mischungen von zwei oder mehr der vorstehend genannten Lösungsmitteln. Dabei können das oder die Lösungsmittel während der gesamten Dauer der Synthese oder nur während eines Teils der Synthese anwesend sein.

Darüber hinaus kann die Komponente B) unter Inertgas, beispielsweise unter Argon oder unter Stickstoff hergestellt werden. Insbesondere wenn eine wasserempfindliche Brønsted-Base als Katalysator verwendet wird, ist es bevorzugt, Inertgas und Lösungsmittel zu trocknen. Wenn man Wasser als Katalysator verwendet, so kann man auf die Trocknung von Lösungsmittel und Inertgas verzichten.

Komponente B) kann analog zur Umsetzung von b1) mit b3) auch unter den gleichen Bedingungen durch Umsetzung von b2) mit b3) hergestellt werden.
Komponente B) kann auch durch Umsetzung von b2) mit b3) wie in der Schrift US 2006 0 033 225 A1 beschrieben hergestellt werden.

Bei einer Variante der Komponente (B) sind die NCO-Endgruppen des Polyimids (B) mit einer gegenüber NCO-Gruppen reaktiven Verbindung geblockt. Hierbei bietet sich zum Beispiel ein sekundäres Amin (b4) an.
Als sekundäres Amin (b4) bieten sich Verbindungen der Form NHR'R" an, wobei R' und R" aliphatische und/oder aromatische Reste sein können. Die aliphatischen Reste können linear, zyklisch und/oder verzweigt sein. R' und R" können identisch sein. Allerdings sind R' und R" kein Wasserstoffatom.
Es eigenen sich zum Beispiel Dimethylamin, Di-n-butylamin oder Diethylamin oder deren Mischungen als Amin (b4). Auch eignen sich Dihexylamin, Di-(2-ethylhexyl)amin, Dicyclohexylamin. Bevorzugt sind Diethylamin und Dibutylamin.

Auch kann Komponente (B) mit einem Alkohol (b5) geblockt werden. Hierbei eigenen sich primäre Alkohole oder deren Mischungen. Aus der Gruppe der primären Alkohole eignen sich insbesondere Methanol, Ethanol, iso-Propanol, n-Propanol, n-Butanol, iso-Butanol. Bevorzugt sind Methanol und iso-Butanol.

In einer Ausführungsform der vorliegenden Erfindung enthält die erfindungsgemäße thermoplastische Formmasse (C) mindestens ein Flammschutzmittel.

Aus der Gruppe der phosphorhaltigen Flammschutzmittel c1) eignen sich Phosphinsäuresalze der Formel (I) oder/und Diphosphinsäuresalze der Formel (II) oder deren Polymere. 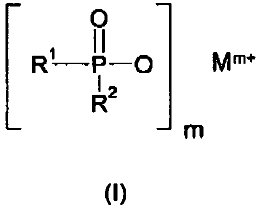 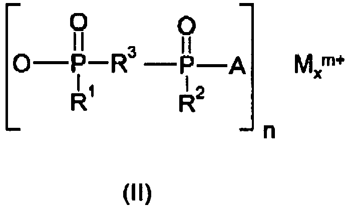 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder-Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase:
- m: 1 bis 4; n 1 bis 4; x 1 bis 4 bedeuten.

Bevorzugt sind R¹, R² der Komponente B gleich oder verschieden und bedeuten Methyl, Ethyl, n-Propyl, Iso-Propyl, n-Butyl, tert.-Butyl, n-Pentyl und/oder Phenyl.

Bevorzugt bedeutet R³ der Komponente B Methylen, Ethylen, n-Propylen, Iso-Propylen, n-Butylen, tert.-Butylen, n-Pentylen, n-Octylen oder n-Dodecylen, Phenylen oder Naphthylen; Methyl-phenylen, Ethyl-phenylen, tert.-Butylphenylen, Methylnaphthylen, Ethyl-naphthylen oder tert.-Butylnaphthylen; Phenyl-methylen, Phenylethylen, Phenyl-propylen oder Phenyl-butylen.

Besonders bevorzugt ist R¹, R² Methyl, Ethyl und M = Al.

Auch eignet sich Phosphor, wobei insbesondere roter oder schwarzer Phosphor oder deren Mischungen eingesetzt werden können.

Gemäß der Erfindung kann als Komponente c2) ein stickstoffhaltiges Flammschutzmittel eingesetzt werden.
Bevorzugt geeignet ist Melamincyanurat, das ein Reaktionsprodukt aus vorzugsweise äquimolaren Mengen von Melamin (Formel III) und Cyanursäure bzw. Isocyanursäure ist (Formeln III a und III b).

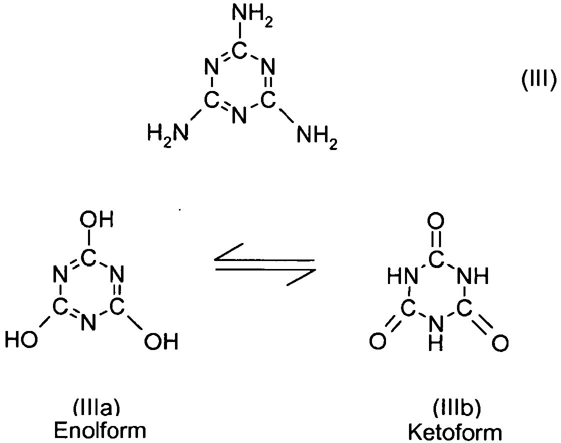

Melamincyanurat wird z.B. durch Umsetzung von wässrigen Lösungen der Ausgangsverbindungen bei 90 bis 100°C erhalten. Das im Handel erhältliche Produkt ist ein weißes Pulver mit einer mittleren Komgröße d₅₀ von 1,5 - 7 µm.

Weitere geeignete Verbindungen (oft auch als Salze oder Addukte bezeichnet) sind Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2).

Bevorzugt sind Melaminpolyphosphatsalze einer 1,3,5-Triazinverbindung, deren Zahl n des durchschnittlichen Kondensationsgrades zwischen 20 und 200 liegt und der 1,3,5-Triazingehalt 1,1 bis 2,0 mol einer 1,3,5-Triazinverbindung, ausgewählt aus der Gruppe, bestehend aus Melamin, Melam, Melem, Melon, Ammelin, Ammelid, 2-Ureidomelamin, Acetoguanamin, Benzoguanamin und Diaminphenyltriazin, pro Mol Phosphoratom beträgt. Bevorzugt beträgt der n-Wert solcher Salze im Allgemeinen zwischen 40 und 150 und das Verhältnis einer 1,3,5-Triazinverbindung pro Mol Phosphoratom vorzugsweise zwischen 1,2 und 1,8. Des Weiteren wird der pH einer 10 gew.-%igen wässrigen Aufschlämmung von Salzen, hergestellt gemäß EP1095030B1 im Allgemeinen mehr als 4,5 und vorzugsweise mindestens 5,0, betragen. Der pH-Wert wird üblicherweise bestimmt, indem 25 g des Salzes und 225 g sauberes Wasser von 25°C in einen 300-ml-Becher gegeben werden, die resultierende wässrige Aufschlammung für 30 Minuten gerührt und dann der pH gemessen wird. Der o.g. n-Wert, der zahlenmittlere Kondensationsgrad, kann mittels 31 P-Feststoff-NMR bestimmt werden. Aus J. R. van Wazer, C. F. Callis, J. Shoolery und R. Jones, J. Am. Chem. Soc., 78, 5715, 1956, ist bekannt, dass die Anzahl benachbarter Phosphatgruppen eine einzigartige, chemische Verschiebung angibt, die die klare Unterscheidung zwischen Orthophosphaten, Pyrophosphaten und Polyphosphaten ermöglicht. In EP1095030B1 ist außerdem ein Verfahren zur Herstellung des gewünschten Polyphosphatsalzes einer 1,3,5-Triazinverbindung, die einen n-Wert von 20 bis 200 aufweist und dessen 1,3,5-Triazingehalt 1,1 bis 2,0 mol einer 1,3,5-Triazinverbindung beträgt, beschrieben. Dieses Verfahren umfaßt die Umwandlung einer 1,3,5-Triazinverbindung mit Orthophosphorsäure in ihr Orthophosphatsalz, gefolgt von Dehydratisierung und Wärmebehandlung, um das Orthophosphatsalz in ein Polyphosphat der 1,3,5-Triazinverbindung umzuwandeln. Diese Wärmebehandlung wird vorzugsweise bei einer Temperatur von mindestens 300°C, und vorzugsweise bei mindestens 310°C, durchgeführt. Zusätzlich zu Orthophosphaten von 1,3,5-Triazinverbindungen können ebenso andere 1,3,5-Triazinphosphate verwendet werden, einschließlich beispielsweise ein Gemisch aus Orthophosphaten und Pyrophosphaten.

### Geeignete Guanidinsalze sind

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und deren Addukte bzw. Salze verstanden werden.

Weiterhin geeignet sind Ammoniumpolyphosphat (NH₄PO₃)ₙ mit n ca. 200 bis 1000 bevorzugt 600 bis 800, und Tris(hydroxyethyl)isocyanurat (THEIC) der Formel IV 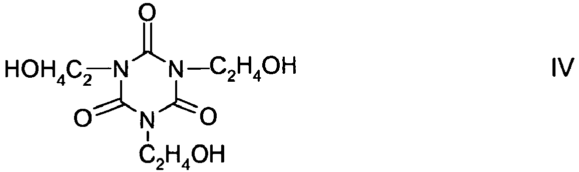 oder dessen Umsetzungsprodukte mit aromatischen Carbonsäuren Ar(COOH)ₘ, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der EP-A 584 567.

Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere (NH₄PO₃)ₙ oder Melaminpyrophosphat oder polymeres Melaminphosphat eingesetzt. Das Mischungsverhältnis z.B. von (NH₄PO₃)ₙ zu THEIC beträgt vorzugsweise 90 bis 50 zu 10 bis 50, insbesondere 80 bis 50 zu 50 bis 20 Gew.-%, bezogen auf die Mischung derartiger Komponenten B1).

Weiterhin geeignet sind Benzoguanamin-Verbindungen der Formel V 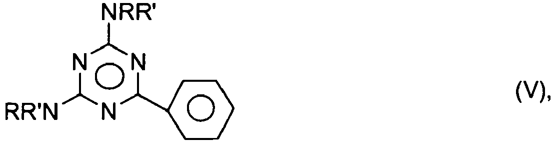 in der R,R' geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel VI 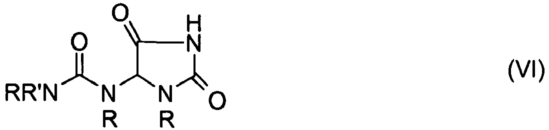 wobei R, R' die in Formel V angegebene Bedeutung haben sowie deren Salze mit Phosphorsäure, Borsäure und/oder Pyrophosphorsäure sowie Glycolurile der Formel VII oder dessen Salze mit den o.g. Säuren 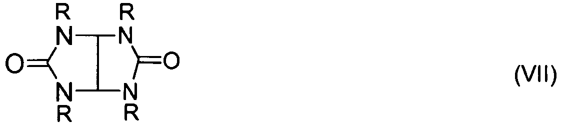 in der R die in Formel V genannte Bedeutung hat.

Geeignete Produkte sind im Handel oder gemäß DE-A 196 14 424 erhältlich.

Das gemäß der Erfindung verwendbare Cyanguanidin (Formel VIII) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

CaNCN + H₂O CO₂ → H₂N-CN + CaCO₃

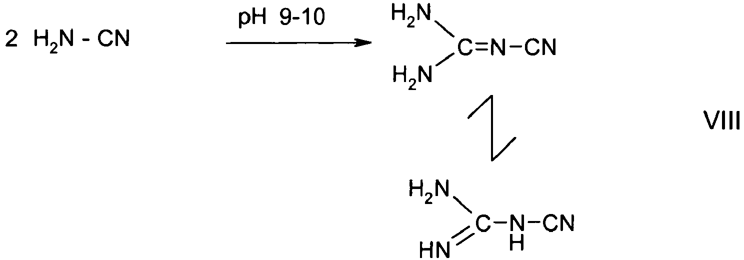

Das im Handel erhältliche Produkt ist ein weißes Pulver mit einem Schmelzpunkt von 209°C bis 211°C.

Als Komponente D) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die thermoplastische Formmasse, verwendet werden, seien verschiedene substituierte Resorcine, Salicylate, Benzotriazole und Benzophenone genannt.

Es können anorganische Pigmente, wie Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid eingesetzt werden.

Weiterhin können Glaspartikel einschließlich Glasfasern in verschiedenen Abmessungen eingesetzt werden.

In einer Ausführungsform der vorliegenden Erfindung enthält erfindungsgemäße thermoplastische Formmasse
im Bereich von 20 bis 98,99 Gew.-% Polyamid (A), bevorzugt 25 bis 98 Gew.-%, besonders bevorzugt von 30 bis 88 Gew.-%,
im Bereich von 0,01 bis 40 Gew.-% Polyimid (B), bevorzugt 1 bis 35 Gew.-%, besonders bevorzugt von 5 bis 30 Gew.-%,
im Bereich von 1 bis 59 Gew.-% Flammschutzmittel (C), bevorzugt 1 bis 40 Gew.-%, besonders bevorzugt von 2 bis 20 Gew.-%
im Bereich von 0-50 Gew.-% weitere Zusatzstoffe (D), bevorzugt 0 bis 30 Gew.-%, besonders bevorzugt von 0.1 bis 30 Gew.-%
wobei die Summe der Gewichtsanteile 100 Gew.-% bezogen auf die thermoplastische Formmasse ergibt.

Einige Beispiele geeigneter erfindungsgemäßer Formmassen sind den folgenden Tabellen zu entnehmen.

**Tabelle 1.1: Formmassen die als Flammschutzmittel c1) Phosphinate umfassen (D besteht überwiegend [d.h. mehr als 50 Gew.-% in Bezug auf Komponente D] aus Glasfaser.)**

| Formmasse | A | B | C | D |
|---|---|---|---|---|
| 1 | 70 | 10 | 20 | 0 |
| 2 | 60 | 20 | 20 | 0 |
| 3 | 50 | 30 | 20 | 0 |
| 4 | 80 | 10 | 10 | 0 |
| 5 | 70 | 20 | 10 | 0 |
| 6 | 60 | 30 | 10 | 0 |
| 7 | 45 | 10 | 20 | 25 |
| 8 | 65 | 20 | 20 | 25 |
| 9 | 25 | 30 | 20 | 25 |
| 10 | 55 | 10 | 10 | 25 |
| 11 | 45 | 20 | 10 | 25 |
| 12 | 35 | 30 | 10 | 25 |

**Tabelle 1.2: Formmassen die als Flammschutzmittel c1) Phosphinate umfassen (D besteht überwiegend [d.h. mehr als 50 Gew.-% in Bezug auf Komponente D] aus Glasfaser.)**

| | FM13 in Gew.-% | FM14 in Gew.-% | FM15 in Gew.-% |
|---|---|---|---|
| A: Polyamid 6 | 20 - 98,99 | 25 - 98 | 30 - 88 |
| B: Polyimid M_{w} 2800 g/mol, Mₙ 1100 g/mol | 0,01 - 40 | 1 - 35 | 5 - 30 |
| C: DEPAL/MPP von 1,5/1 bis 3/1 | 1 - 59 | 1 - 40 | 2 - 20 |
| D: Glasfasern | 0 - 50 | 0 - 30 | 0,1 - 30 |

| | FM16 in Gew.-% | FM17 in Gew.-% | FM18 in Gew.-% |
|---|---|---|---|
| A: Polyamid 66 | 20 - 98,99 | 25 - 98 | 30 - 88 |
| B: Polyimid M_{w} 2800 g/mol, Mₙ 1100 g/mol | 0,01 - 40 | 1 - 35 | 5 - 30 |
| C: DEPAL/MPP von 1,5/1 bis 3/1 | 1 - 59 | 1 - 40 | 2 - 20 |
| D: Glasfasern | 0 - 50 | 0 - 30 | 0,1 - 30 |

**Tabelle 2.1: Formmassen die als Flammschutzmittel c1) roten Phosphor umfassen (D besteht überwiegend [d.h. mehr als 50 Gew.-% in Bezug auf Komponente D] aus Glasfaser.)**

| Formmasse | A | B | C | D |
|---|---|---|---|---|
| 19 | 70 | 10 | 7,5 | 0 |
| 20 | 60 | 20 | 7,5 | 0 |
| 21 | 50 | 30 | 7,5 | 0 |
| 22 | 80 | 10 | 15 | 0 |
| 23 | 70 | 20 | 15 | 0 |
| 24 | 60 | 30 | 15 | 0 |
| 25 | 45 | 10 | 7,5 | 25 |
| 26 | 65 | 20 | 7,5 | 25 |
| 27 | 65 | 30 | 7,5 | 25 |
| 28 | 65 | 10 | 15 | 25 |
| 29 | 25 | 20 | 15 | 25 |
| 30 | 55 | 30 | 15 | 25 |

**Tabelle 2.2: Formmassen die als Flammschutzmittel c1) roten Phosphor umfassen (D besteht überwiegend [d.h. mehr als 50 Gew.-% in Bezug auf Komponente D] aus Glasfaser.)**

| | FM31 in Gew.-% | FM32 in Gew.-% | FM33 in Gew.-% |
|---|---|---|---|
| A: Polyamid 6 | 20 - 98,99 | 25 - 98 | 30 - 88 |
| B: Polyimid M_{w} 2800 g/mol, Mₙ 1100 g/mol | 0,01 - 40 | 1 - 35 | 5 - 30 |
| C: roter Phosphor | 1 - 59 | 1 - 40 | 2 - 20 |
| D: Glasfasern und Schlagzäh Modifier | 0 - 50 | 0 - 30 | 0,1 - 30 |

| | FM34 in Gew.-% | FM35 in Gew.-% | FM36 in Gew.-% |
|---|---|---|---|
| A: Polyamid 66 | 20 - 98,99 | 25 - 98 | 30 - 88 |
| B: Polyimid M_{w} 2800 g/mol, Mₙ 1100 g/mol | 0,01 - 40 | 1 - 35 | 5 - 30 |
| C: roter Phosphor | 1 - 59 | 1 - 40 | 2 - 20 |
| D: Glasfasern und Schlagzäh Modifier | 0 - 50 | 0 - 30 | 0,1 - 30 |

Die erfindungsgemäße thermoplastische Formmasse kann nach den bekannten Verfahren hergestellt werden. Hierzu werden die Ausgangskomponenten z.B. in üblichen Mischvorrichtungen wie Schneckenextrudern, Brabender-Mühlen oder Banbury-Mühlen gemischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel in Bereichen von 240 °C bis 265 °C. Die Temperatur bezieht sich auf die Temperatur des Extruders.

Die erfindungsgemäße thermoplastische Formmasse weist flammhemmende Wirkung auf. Zum Nachweis der flammhemmenden Eigenschaften wurden Formkörper hergestellt, die vor dem Hintergrund der guten Verarbeitbarkeit überraschender Weise den Brandtest UL 94 mit der Klasse V0 oder V1 bestanden.

Daher eignet sich die erfindungsgemäße thermoplastische Formmasse zur Herstellung von industriell hergestellten flammgehemmten Materialien.

Die mechanischen Eigenschaften der erfindungsgemäßen thermoplastischen Formmasse begünstigen die Verwendung der thermoplastischen Formmasse zur Herstellung von Fasern, Folien und/oder Formkörpern. Insbesondere eignet sich die thermoplastische Zusammensetzung für die Herstellung von speziellen Formkörpern im Fahrzeug und Gerätebau zum Beispiel für industrielle oder Verbraucher nahe Zwecke. So kann die thermoplastische Formmasse zur Produktion von Elektronikteilen, Gehäusen, Gehäuseteilen, Abdeckklappen, Stossfängern, Spoilern, Karosserieteilen, Dämpfungselementen, Federn, Griffen, Ladeluftrohren, Kraftfahrzeuginnenanwendungen wie Instrumententafeln, Teile von Instrumententafeln, Instrumententafelträger, Abdeckungen, Luftkanäle, Lufteinlassgitter, Schiebedachtraversen, Dachrahmen, Anbauteile, insbesondere die Mittelkonsole als Teil des Handschuhfachs oder auch Tachoholzen verwendet werden.

Die erfindungsgemäße thermoplastische Formmasse kann als Überzugmittel für Fasern, Folien und/oder Formkörper verwendet werden. Als Formkörper werden dreidimensional Gegenstände verstanden, die sich anbieten, mit einer thermoplastischen Zusammensetzung überzogen zu werden. Die Dicke solcher Beschichtungen liegt in der Regel in Bereichen von 0.1 bis 3.0 cm, bevorzugt von 0.1 bis 2.0 cm, ganz besonders bevorzugt von 0.5 bis 2.0 cm. Derartige Beschichtungen können durch dem Fachmann bekannte Verfahren wie laminieren, lackieren, tauchen, sprühen, auftragen hergestellt werden.

Die Erfindung wird durch Beispiele verdeutlicht.

### Beispiele

### ISO-Normen und Methoden

DIN ISO 307: Kunststoffe - Polyamide - Bestimmung der Viskositätszahl (2007).
DIN EN ISO 11 909: Bindemittel für Beschichtungsstoffe - Isocyanatharze - Allgemeine Prüfverfahren (ISO 11909:2007); Deutsche Fassung EN ISO 11909:2007.
ISO 4589-2: Kunststoffe - Bestimmung des Brennverhaltens durch den SauerstoffIndex - Teil 2: Prüfung bei Umgebungstemperatur (ISO 4589-2:1996 + Amd. 1:2005) Deutsche Fassung EN ISO 4589-2:1999 + A1:2006.
UL94 Flammtest

Die Molekulargewichte der Polyisocyanate wurden durch Gelpermeationschromatographie (GPC mit einem Refraktometer als Detektor) bestimmt. Als Standard diente Polymethylmethacrylat (PMMA). Als Lösungsmittel diente Tetrahydrofuran (THF), wenn nicht ausdrücklich anders angegeben.
Der NCO-Gehalt wurde titrimetrisch nach DIN EN ISO 11 909 bestimmt und in Gew.-% angegeben.

### Allgemeine Anmerkungen

### Komponente A)

Polyamid A.1: Polyamid 66 mit einer Viskositätszahl VZ von 150 ml/g, gemessen als 0,5 gew.-%ige Lösung in 96 gew.-%iger Schwefelsäure bei 25°C nach ISO 307. (Es wurde Ultramid® A27 der BASF SE verwendet).
Polyamid A.2: Polyamid 6 mit einer Viskositätszahl VZ von 145 ml/g, gemessen als 0,5 gew.-%ige Lösung in 96 gew.-%iger Schwefelsäure bei 25°C nach ISO 307. (Es wurde Ultramid® B27 der BASF SE verwendet).

Komponente B)

### Synthesebeispiele:

### Materialien

Polyisocyanat (b1.1): polymeres 4,4'-Diphenylmethandiisocyanat ("Polymer-MDI"), 2,7 Isocyanatgruppen pro Molekül, Viskosität: 195 mPa·s bei 25°C, kommerziell erhältlich als Lupranat® M20 W
Polyisocyanat (b1.2): Isocyanurat von Hexamethylendiisocyanat, im Mittel 3,6 Isocyanatgruppen pro Molekül, kommerziell erhältlich als Basonat® HI der Firma BASF SE.
Anhydrid (b3.1): 1,2,4,5-Benzoltetracarbonsäuredianhydrid
Sekundäres Amin (b4.1): n-Dibutylamin
Primärer Alkohol (b5.1): Methanol
Primärer Alkohol (b5.2): t-Butanol

Die Synthesen wurden unter Stickstoff durchgeführt, wenn nicht anders beschrieben. Wenn Natriummethanolat als Katalysator verwendet wurde, so wurde trockener Stickstoff gewählt.

### 1) Polyimid B.1

100 g Anhydrid (b3.1) (0,46 mol) in 1400 ml Aceton gelöst, wurden vorgelegt und mit 0,1 g Wasser versetzt. Anschließend wurde bei 20°C 308 g (0,46 mol) Polyisocyanat (b 1.2) zugegeben. Das Gemisch wurde auf 55°C erwärmt. Nach weiteren 12 h wurde Methanol (b5.1) im Überschuss zugegeben und weitere zwei Stunden nachgerührt. Anschließend wurde das Aceton-Methanol Gemisch abdestilliert. Gegen Ende der Destillation wurde der Rückstand mit Stickstoff gestrippt. Man erhielt Polyimid (B.1) mit den folgenden analytischen Daten: M_{w} = 2100 g/mol, (Lösungsmittel THF), Mₙ = 600 g/mol, Säurezahl = 41 mg KOH/g.

### 2) Polyimid B.2

100 g Anhydrid (b3.1) (0,46 mol) in 1400 ml Aceton gelöst, wurden vorgelegt und mit 0,1 g Wasser versetzt. Anschließend wurde bei 20°C 150 g (0,224 mol) Polyisocyanat (b 1.2) zugegeben. Das Gemisch wurde auf 55°C erwärmt und bei dieser Temperatur gehalten. Nach weiteren 8 h wurde wurden 140 g n-Dibutylamin (b4.1) unter Rühren zugegeben und weitere zwei Stunden nachgerührt. Anschließend wurde Aceton abdestilliert. Gegen Ende der Destillation wurde der Rückstand mit Stickstoff gestrippt. Man erhielt Polyimid (B.2) mit den folgenden analytischen Daten: M_{w} = 3800 g/mol, (Lösungsmittel THF), Mₙ = 500 g/mol, Säurezahl = 62 mg KOH/g.

### 3) Polyimid B.3

480 g Anhydrid (b3.1) (2,20 mol), gelöst in 1400 ml N-methylpyrrolidon, wurden vorgelegt und mit 0,1 g Wasser versetzt. Das Gemisch wurde auf 80°C erwärmt. Bei 80°C wurden 370 g (1,10 mol) Polyisocyanat (b 1.1) zugegeben. Das Gemisch wurde für drei Stunden bei 80°C gerührt. Anschließend wurde t-Butanol (b5.2) im Überschuss bei 50°C zugegeben. Es wurde eine weitere Stunde nachgerührt. Das Gemisch wurde abgekühlt und bei Raumtemperatur in Wasser gegeben. Das erhaltene Pulver wurde bei 140°C unter Stickstoff Atmosphäre getrocknet. Man erhielt Polyimid (B.3) mit den folgenden analytischen Daten: M_{w} = 2800 g/mol, (Lösungsmittel THF), Mₙ = 1100 g/mol.

### Komponente C

C1) Mischung aus 50 Gew.-% partikulärer roter Phosphor in 50 Gew.-% Polyamid 66 mit einem Molekulargewicht M_{w} von ca. 75.000 D.
C2) Mischung aus 64% Aluminiumdiethylphosphinat (DEPAL), 31 Gew.-%, Melaminpolyphosphat (MPP), Zinkborat (Gew.-5%).

### Komponente D)

D1) Standard Schnittglasfaser für Polyamide, Länge = 4.5mm, Durchmesser = 10 µm.
D2) Ethylencopolymer aus 59,8 Gew.-% Ethylen, 4,5 Gew.-% Acrylsäure, 35 Gew.-% n-Butylacrylat und 0,7 Gew.-% Maleinsäureanhydrid.
D3a) Stearylstearat.
D3b) Zinkstearat.
D3c) Ca-stearat.

### Herstellung der thermoplastischen Formmassen

Die thermoplastischen Formmassen wurden hergestellt, indem 20 g der Komponenten A) bis D) bei 260 bis 280 °C mittels diskontinuierlicher Extrusion verarbeitet wurden. Die Verweildauer der thermoplastischen Formmasse in dem Extruder betrug von 3 min bis 5 min.

Im Anschluss erfolgte die Formgebung der Schmelzmasse mit Hilfe der Spritzgusseinheit zu UL 94 und LOI Probekörper.

Prüfung der Phosphorstabilität der roter Phosphor-haltigen Formmassen
Roter Phosphor disproportioniert in Gegenwart von Wasser und Sauerstoff, wobei sich wasserlösliche Phosphorverbindungen bilden. Als Maß für die Stabilität des Phosphors wurden die Probenkörper (Normkleinstäbe) der Größe 50x6x4mm der Phosphor enthaltenden Formmasse bei 60°C in Wasser gelagert und der Phosphorgehalt der wässrigen Lösung nach entsprechender Lagerdauer per ICP-OES bestimmt.
Es wurden ca. 80g Normkleinstäbe in einen 300-mL-PE-Becher eingewogen und mit 150g VE-Wasser aufgefüllt und mit Wasser bedeckt. Danach wurde die Wasserstandshöhe auf dem Becher markiert, der Becher verschlossen und auf 60°C erwärmt. Regelmäßig wurde die durch verdampfen reduzierte Wassermenge nachgefüllt. Für die Messung des Phosphorgehaltes in der Lösung wurde die Probe nach einer Lagerzeit von 14/30/50/100 Tagen auf Raumtemperatur abgekühlt, mit VE-Wasser genau auf 150g aufgefüllt und nach kurzem Umschwenken 10 mL für die Analyse entnommen. Die nun fehlende Wassermenge wurde wieder aufgefüllt und die Probe entsprechend weiter bis zum Ablauf der 100 Tage gelagert. Der Gehalt an Phosphor in der wässrigen Lösung wird über ICP-OES (inductively coupled plasma - optical emission spectroscopy) bestimmt und erfasst alle im Wasser befindlichen Phosphorverbindungen. Die Phosphorstabilität wurde in mg/L P in Abhängigkeit von der Lagerzeit dokumentiert.

### Kurzbeschreibung Flammtests:

### Limiting Oxygen Index (LOI)

Der LOI- Test wird nach der Norm ISO 4589-2 ausgeführt. Der Sauerstoffindex ist ein Maß für die Brennbarkeit von Kunststoffen, denn er gibt an, wie viel Sauerstoff mindestens in der umgebenden Atmosphäre vorhanden sein muss, damit die betrachtete Probe brennt. Ein Kunststoff mit hohem LOI ist demnach schwer brennbar, ein niedriger LOI ein Kennzeichen für leichte Brennbarkeit. Kunststoffe mit einem LOI über 23 werden als schwer brennbar eingestuft, da sie für ihre Verbrennung mehr Sauerstoff benötigen als in der Luft vorhanden ist. Die Durchführung des Versuchs findet in einem Glasrohr statt, das 450 - 500 mm hoch und 75-100 mm breit ist. Als Probekörper werden halbierte Brandstäbe (L/B: 125mm/6,5mm) der Dicke 1,6 mm verwendet. Am Fuß des Rohres wird ein Gasstrom aus Stickstoff und Sauerstoff eingeleitet, während der Probekörper am oberen Ende mit einer kleinen Flamme beflammt wird. Das Ziel dabei ist es, die minimale Konzentration an Sauerstoff zu finden bei der der Prüfstab mindestens drei Minuten lang ohne Unterbrechung brennt oder bis zum Boden abbrennt. (Fire Retardancy of polymeric materials; edited by Charles A. Wilkie and Alexander B. Morgan - 2. Edition - Taylor and Francis Group, LLC 2010; Seite 356 f.)

### UL94-Prüfung

Die hier beschriebene Prüfung ist die UL94-Prüfung mit vertikaler Probenanordnung. Die verwendeten Probekörper haben die Abmessungen 125mm x 13mm und werden in drei verschiedenen Dicken (0,4 mm, 0,8mm und 1,6 mm) durch Spritzguß hergestellt. Vor der Prüfung werden diese entweder 48 Stunden im Normalklima 23 °C/50 % rel. Luftfeuchte gelagert oder 168 Stunden bei 70 °C mit anschließender Kühlung im Exikator.
Für die Prüfung werden Messreihen mit jeweils 5 Prüfstäben verwendet. Der Prüfstab wird in eine Aufhängevorrichtung eingespannt, die in einer zugfreien Prüfkammmer angeordnet ist. 300mm unter der Unterkante des Prüfstabes befindet sich eine Brandwatte in horizontaler Lage mit den Abmessungen 50 mm x 50 mm x 6 mm. Der Prüfstab wird mit einem Bunsenbrenner beflammt, der mit 20 mm hoher, nicht leuchtender Flamme brennt. Die Beflammung erfolgt zweimal 10 s lang, wobei die zweite Beflammung beginnt, sobald die entzündete Probe erloschen ist. (Werkstoff-Führer Kunststoffe; Hrsg. von Walter Hellerrich, Günther Harsch und Siegfried Haenle - 9. Auflage - Hanser Verlag München Wien 2004; Seite 259 ff)

Klassifizierung der Ergebnisse des UL94-Tests:

| | |
|---|---|
| Klasse 94 V-0 | Kein Nachbrennen länger als 10 s nach Beflammungsende; Summe der Nachbrennzeiten bei 10 Beflammungen (5 Proben) nicht größer als 50 s; kein brennendes Abtropfen beziehungsweise Entzünden der Brandwatte; kein vollständiges Abbrennen der Proben; kein Nachglühen der Proben länger als 30s nach Beflammungsende |
| Klasse 94 V-1 | Kein Nachbrennen länger als 30 s nach Beflammungsende; Summe der Nachbrennzeiten bei 10 Beflammungen (5 Proben) nicht größer als 250 s; kein brennendes Abtropfen beziehungsweise Entzünden der Bodenwatte; kein vollständiges Abbrennen der Proben; kein Nachglühen der Proben länger als 60 s nach Beflammungsende |
| Klasse 94 V-2 | Zündung der Watte durch brennendes Abtropfen; kein Nachbrennen länger als 30 s nach Beflammungsende; Summe der Nachbrennzeiten bei 10 Beflammungen (5 Proben) nicht größer als 250 s; kein vollständiges Abbrennen der Proben; kein Nachglühen der Proben länger als 60s nach Beflammungsende |
| Klasse 94 V-- | Kein Erfüllen der vorher genannten Kriterien |

### Flammtest

Der UL94 Flammtest wurde gemäß der Norm an 1,6 cm dicken Proben durchgeführt.

**Tabelle 3: Ergebnisse des Flammtests: Formmassen mit rotem Phosphor.**

| | Beispiel 1 | Vergleichsbsp.1.1 |
|---|---|---|
| Komponente A | 45,33% PA-66 | 65,33% PA-66 |
| Komponente B | 20% Polyimid B.2 | - |
| Komponente c1 | 3,25% | 3,25% |
| Komponente c2 | - | - |
| Komponente D1 | 25% Glasfasern | 25% Glasfasern |
| Komponente D2 | 6% Ethylencopolymer | 6% Ethylencopolymer |
| Komponente D3a | 0,07 | 0,07 |
| Komponente D3c | 0,35 | 0,35 |
| UL 94 Flammtest | V0 | V1 |

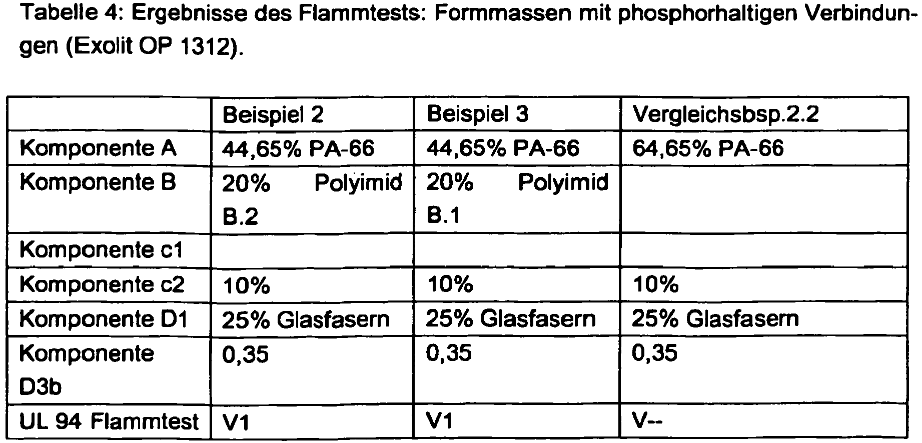

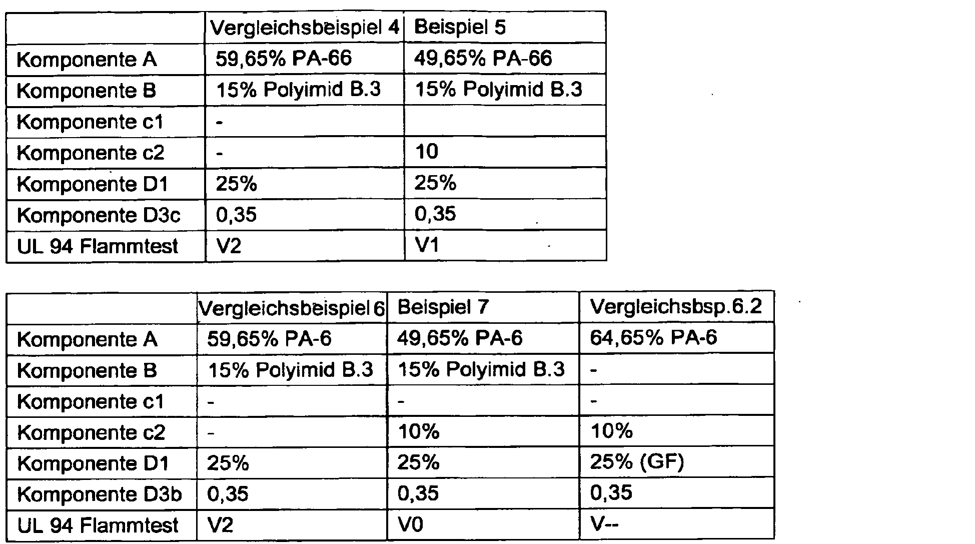

## Patentansprüche

1. Thermoplastische Formmasse enthaltend
A) von 20 bis 98,99 Gew.-% mindestens eines Polyamids,
B) von 0.01 bis 40 Gew.-% mindestens eines verzweigten Polyimids, gewählt aus Kondensationsprodukten von entweder
b1) mindestens einem Polyisocyanat mit im Mittel mehr als zwei Isocyanatgruppen pro Molekül oder
b2) mindestens einem Polyamin mit im Mittel mehr als zwei Aminogruppen pro Molekül und
b3) mindestens einer Polycarbonsäure mit mindestens drei COOH-Gruppen pro Molekül oder ihrem Anhydrid,
C) von 1 bis 59 Gew.-% mindestens eines Flammschutzmittels ausgewählt aus der Gruppe
c1) der phosphorhaltigen Flammschutzmittel
c2) der stickstoffhaltigen Flammschutzmittel
und deren Mischungen
D) von 0 bis 50 Gew.-% weitere Zusatzstoffe
wobei die Summe der Gewichtsanteile 100 Gew.-% bezogen auf die Formmasse ergibt.

2. Thermoplastische Formmasse nach Anspruch 1 wobei als Polycarbonsäure (b3) eine Polycarbonsäure mit mindestens vier COOH-Gruppen pro Molekül oder das betreffende Anhydrid ausgewählt wird.

3. Thermoplastische Formmasse nach Anspruch 1 oder 2 wobei das Polyisocyanat (b1) ausgewählt ist aus oligomerem Hexamethylendiisocyanat, oligomerem Tetramethylendiisocyanat, oligomerem Isophorondiisocyanat, oligomerem Diphenylmethandiisocyanat, trimerem Toluylendiisocyanat und Mischungen der vorstehend genannten Polyisocyanate.

4. Thermoplastische Formmasse nach mindestens einem der Ansprüche 1 bis 3 wobei das Polyimid (B) aus solchen Polyimiden gewählt wird, die ein Molekulargewicht M_{w} von 1.000 bis 200.000 g/mol aufweisen.

5. Thermoplastische Formmasse nach mindestens einem der Ansprüche 1 bis 4 wobei das Polyimid (B) eine Polydispersität M_{w}/Mₙ von mindestens 1,4 aufweist.

6. Thermoplastische Formmasse nach mindestens einem der Ansprüche 1 bis 5 wobei das Polyimid (B) einen Verzweigungsgrad von 10 bis 99,9 % aufweist.

7. Thermoplastische Formmasse nach mindestens einem der Ansprüche 1 bis 6 wobei als stickstoffhaltiges Flammschutzmittel c2) eine heterocyclische Verbindung eingesetzt wird, die mindestens ein Stickstoffatom umfasst.

8. Verwendung der thermoplastischen Formmasse gemäß mindestens einem der Ansprüche 1 bis 7 als Überzugmittel.

9. Verwendung der thermoplastischen Formmasse gemäß mindestens einem der Ansprüche 1 bis 7 zur Herstellungen von Fasern, Folien oder Formkörpern.

10. Fasern, Folien oder Formkörper enthaltend eine thermoplastische Formmasse gemäß mindestens einem der Ansprüche 1 bis 7.

## Claims

1. A thermoplastic molding composition comprising
A) from 20 to 98.99% by weight of at least one polyamide,
B) from 0.01 to 40% by weight of at least one branched polyimide, selected from condensates of either
b1) at least one polyisocyanate having an average of more than two isocyanate groups per molecule or
b2) at least one polyamine having an average of more than two amino groups per molecule and
b3) at least one polycarboxylic acid having at least three COOH groups per molecule or its anhydride,
C) from 1 to 59% by weight of at least one flame retardant selected from the group of
c1) the phosphorus-containing flame retardants
c2) the nitrogen-containing flame retardants
and mixtures of these,
D) from 0 to 50% by weight of further additives,
where the total of the proportions by weight is 100% by weight based on the molding composition.

2. The thermoplastic molding composition according to claim 1, where polycarboxylic acid (b3) selected comprises a polycarboxylic acid having at least four COOH groups per molecule or the relevant anhydride.

3. The thermoplastic molding composition according to claim 1 or 2, where the polyisocyanate (b1) has been selected from oligomeric hexamethylene diisocyanate, oligomeric tetramethylene diisocyanate, oligomeric isophorone diisocyanate, oligomeric diphenylmethane diisocyanate, trimeric tolylene diisocyanate and mixtures of the abovementioned polyisocyanates.

4. The thermoplastic molding composition according to at least one of claims 1 to 3, where the polyimide (B) is selected from polyimides which have a molar mass M_{w} of from 1000 to 200 000 g/mol.

5. The thermoplastic molding composition according to at least one of claims 1 to 4, where the polydispersity M_{w}/Mₙ of the polyimide (B) is at least 1.4.

6. The thermoplastic molding composition according to at least one of claims 1 to 5, where the degree of branching of the polyimide (B) is from 10 to 99.9%.

7. The thermoplastic molding composition according to at least one of claims 1 to 6, where the nitrogen-containing flame retardant c2) used comprises a heterocyclic compound which comprises at least one nitrogen atom.

8. The use of the thermoplastic molding composition according to at least one of claims 1 to 7 as coating material.

9. The use of the thermoplastic molding composition according to at least one of claims 1 to 7 for producing fibers, foils or moldings.

10. A fiber, foil or molding comprising a thermoplastic molding composition according to at least one of claims 1 to 7.

## Revendications

1. Matière à mouler thermoplastique contenant
A) de 20 à 98,99 % en poids d'au moins un polyamide,
B) de 0,01 à 40 % en poids d'au moins un polyimide ramifié, choisi parmi des produits de condensation de soit
b1) au moins un polyisocyanate comportant en moyenne plus de deux groupes isocyanate par molécule soit
b2) au moins une polyamine comportant en moyenne plus de deux groupes amino par molécule et
b3) au moins un acide polycarboxylique comportant au moins trois groupes COOH par molécule ou son anhydride,
C) de 1 à 59 % en poids d'au moins un agent ignifuge choisi dans le groupe
c1) des agents ignifuges phosphorés
c2) des agents ignifuges azotés
et des mélanges de ceux-ci
D) de 0 à 50 % en poids d'autres additifs,
la somme des parties en poids étant égale à 100 % en poids par rapport à la matière à mouler.

2. Matière à mouler thermoplastique selon la revendication 1, dans laquelle on choisit comme acide polycarboxylique (b3) un acide polycarboxylique comportant au moins quatre groupes COOH par molécule ou l'anhydride correspondant.

3. Matière à mouler thermoplastique selon la revendication 1 ou 2, dans laquelle le polyisocyanate (b1) est choisi parmi un hexaméthylènediisocyanate oligomère, tétraméhylènediisocyanate oligomère, isophorone-diisocyanate oligomère, diphénylméthane-diisocyanate oligomère, le toluylènediisocyanate trimère et des mélanges des polyisocyanates précités.

4. Matière à mouler thermoplastique selon au moins l'une quelconque des revendications 1 à 3, dans laquelle on choisit le polyimide (B) parmi les polyimides qui présentent une masse moléculaire M_{w} de 1 000 à 200 000 g/mole.

5. Matière à mouler thermoplastique selon au moins l'une quelconque des revendications 1 à 4, dans laquelle le polyimide (B) présente une polydispersité M_{w}/Mₙ d'au moins 1,4.

6. Matière à mouler thermoplastique selon au moins l'une quelconque des revendications 1 à 5, dans laquelle le polyimide (B) présente un degré de ramification de 10 à 99,9 %.

7. Matière à mouler thermoplastique selon au moins l'une quelconque des revendications 1 à 6, dans laquelle on utilise comme agent ignifuge azoté c2) un composé hétérocyclique qui comprend au moins un atome d'azote.

8. Utilisation de la matière à mouler thermoplastique selon au moins l'une quelconque des revendications 1 à 7 en tant que produit de revêtement.

9. Utilisation de la matière à mouler thermoplastique selon au moins l'une quelconque des revendications 1 à 7 pour la fabrication de fibres, films ou corps moulés.

10. Fibres, films ou corps moulés contenant une matière à mouler thermoplastique selon au moins l'une quelconque des revendications 1 à 7.
